(19) Europäisches Patentamt
European Patent Office
Office européen des brevets

(11) **EP 3 358 652 B1**

(12) **EUROPEAN PATENT SPECIFICATION**

(45) Date of publication and mention
of the grant of the patent:
**18.11.2020 Bulletin 2020/47**

(51) Int Cl.:
*H01M 4/131* (2010.01)    *H01M 4/505* (2010.01)
*H01M 4/525* (2010.01)    *H01M 4/62* (2006.01)
*H01M 10/0525* (2010.01)    *H01M 10/0566* (2010.01)
*H01M 4/02* (2006.01)

(21) Application number: **16851308.3**

(22) Date of filing: **21.09.2016**

(86) International application number:
**PCT/JP2016/077858**

(87) International publication number:
**WO 2017/057134 (06.04.2017 Gazette 2017/14)**

(54) **POSITIVE ELECTRODE FOR LITHIUM-ION SECONDARY CELL, AND LITHIUM-ION SECONDARY CELL**

POSITIVELEKTRODE FÜR LITHIUM-IONEN-SEKUNDÄRBATTERIE SOWIE LITHIUM-IONEN-SEKUNDÄRBATTERIE

ÉLECTRODE POSITIVE POUR PILE RECHARGEABLE LITHIUM-ION, ET PILE RECHARGEABLE LITHIUM-ION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.09.2015 JP 2015193413**

(43) Date of publication of application:
**08.08.2018 Bulletin 2018/32**

(73) Proprietor: **Envision AESC Energy Devices Ltd.
Sagamihara-shi, Kanagawa 252-5298 (JP)**

(72) Inventor: **FUJISAWA, Ai
Sagamihara-shi
Kanagawa 252-5298 (JP)**

(74) Representative: **Glawe, Delfs, Moll
Partnerschaft mbB von
Patent- und Rechtsanwälten
Postfach 13 03 91
20103 Hamburg (DE)**

(56) References cited:
**EP-A1- 2 523 240    EP-A1- 2 654 108
WO-A1-2011/002013    WO-A1-2014/142283
JP-A- 2014 116 217    JP-A- 2015 135 822
US-A1- 2009 061 292**

**Description**

Technical Field

The present invention relates to a positive electrode for a lithium ion secondary battery, and a lithium ion secondary battery.

Background Art

Lithium ion secondary batteries, since being high in the energy density and excellent in the charge and discharge cycle characteristics, are broadly used as power sources for small-size mobile devices such as cell phones and laptop computers. Further in recent years, in consideration of the environmental problem and in growing concern for the energy saving, there have been raised demands for large-size batteries requiring a high capacity and a long life, in electric cars and hybrid electric cars, power storage fields and the like.

Lithium ion secondary batteries are generally constituted mainly of a negative electrode containing, as a negative electrode active material, a carbon material capable of occluding and releasing lithium ions, a positive electrode containing, as a positive electrode active material, a lithium composite oxide capable of occluding and releasing lithium ions, a separator separating the negative electrode and the positive electrode, and a nonaqueous electrolyte solution in which a lithium salt is dissolved in a nonaqueous solvent.

For example, Patent Literature 1, for the purpose of providing a battery excellent in the high-rate discharge characteristics in consideration of such a problem that a battery having a raised electrode density is inferior in the high-rate discharge characteristics, discloses a lithium ion secondary battery in which a lithium nickel cobalt composite oxide having a specific composition is used as a positive electrode active material; the electrode density of the positive electrode is 3.75 to 4.1 g/cm$^3$; the BET specific surface area as an electrode of the positive electrode is 1.3 to 3.5 m$^2$/g; and the porosity volume of the positive electrode is 0.005 to 0.02 cm$^3$/g.

Citation List

Patent Literature

Patent Literature 1: WO2014/017583

Summary of Invention

Technical Problem

However, further improvements in life characteristics are demanded. Then, an object of the present invention is to provide a lithium ion secondary battery improved in the cycle characteristics while having a sufficient energy density, and a positive electrode suitable therefor. Solution to Problem

According to one aspect of the present invention, there is provided a positive electrode for a lithium ion secondary battery, comprising a current collector and a positive electrode active material layer on the current collector, wherein the positive electrode active material layer comprises a positive electrode active material, a conductive auxiliary agent and a binder; the positive electrode active material comprises a lithium composite oxide, and a BET specific surface area of the positive electrode active material is 0.1 to 1 m$^2$/g; at least a part of the conductive auxiliary agent comprises a spherical amorphous carbon particle; and a content of the conductive auxiliary agent is 1.8 to 6% by mass with respect to the positive electrode active material; wherein a porosity of the positive electrode active material is 16% or higher and 19% or lower.

According to another aspect of the present invention, there is provided a lithium ion secondary battery comprising the above positive electrode, a negative electrode and a nonaqueous electrolyte solution.

Advantageous Effects of Invention

According to the exemplary embodiment, a lithium ion secondary battery improved in the cycle characteristics while having a sufficient energy density, and a positive electrode suitable therefor can be provided.

Brief Description of Drawing

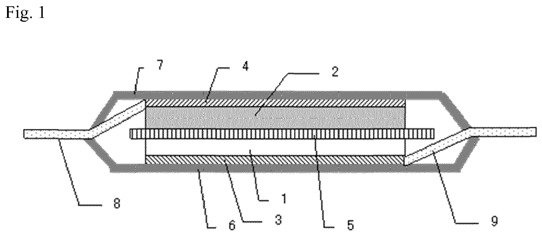

[Figure 1]Figure 1 is a schematic cross-sectional view to interpret a positive electrode according to the exemplary embodiment.

Description of Embodiment

A positive electrode for a lithium ion secondary battery according to the exemplary embodiment comprises a current collector and a positive electrode active material layer formed on the current collector.

The positive electrode active material layer, from the point of making the energy density high, comprises a lithium composite oxide. The lithium composite oxide is preferably a lithium composite oxide containing nickel (lithium nickel composite oxide), and especially preferably comprises a lithium nickel composite oxide having a layered crystal structure. The positive electrode active material layer may contain other active materials other than the lithium composite oxide, but from the point of the energy density, the content of the lithium composite oxide is preferably 80% by mass or higher, more preferably 90% by mass or higher, and still more preferably 95% by mass or higher.

The lithium nickel composite oxide is preferably a compound represented by the following formula:

$$Li_aNi_{1-x}M_xO_2 \qquad (1)$$

wherein M is at least one selected from Li, Co, Mn, Mg and Al; and $0 < a \leq 1$ and $0 < x < 0.7$.

The positive electrode active material layer may comprise, as another lithium composite oxide, a lithium manganese composite oxide having a spinel structure.

The lithium manganese composite oxide is preferably a compound represented by the following formula:

$$Li_{1+x}Mn_{2-x-y}Me_yO_4$$

wherein Me contains at least one selected from the group consisting of Mg, Al, Fe, Co, Ni and Cu; and $0 \leq x < 0.25$ and $0 \leq y < 0.5$.

Mixed use of the lithium nickel composite oxide having a layered crystal structure (hereinafter, "active material A") and the lithium manganese composite oxide having a spinel structure (hereinafter, "active material B") enables relaxing the influence by expansion and contraction of active material A particles by charge and discharge cycles, and then enables suppressing the capacity reduction caused by exfoliation.

Then, in the case of using the active material B singly, it is likely that Mn ions dissolve out by charge and discharge cycles and high-temperature storage, and the capacity is degraded due to deposition of the Mn ions on the opposite negative electrode surface. When the active material A and the active material B are mixed and used, however, the active material A having a layered crystal structure functions as a proton scavenger, and can suppress the dissolution of Mn ions.

Consequently, a lithium ion secondary battery having a high energy density and a long life can be provided.

The mixing ratio (A : B in mass ratio) of the active material A and the active material B is, from the point of obtaining a sufficient mixing effect and providing a high energy density, preferably 80:20 to 95:5, and more preferably 90:10 to 95:5.

The BET specific surface area (based on the measurement at 77K by the nitrogen adsorption method) of the positive electrode active material is preferably in the range of 0.1 to 1 $m^2$/g, and more preferably 0.3 to 0.5 $m^2$/g. In the case where the specific surface area of the positive electrode active material is excessively small, since the particle diameter is large, cracking becomes liable to be generated during the pressing time in the electrode fabrication and during the cycle time, and is likely to bring about remarkable degradation of characteristics and makes it difficult to make the electrode density high. Conversely, in the case where the specific surface area is excessively large, the necessary amount of the conductive auxiliary agent to be contacted with the active material becomes large, resultantly making it difficult to make the energy density high. When the specific surface area of the positive electrode active material is in the above range, from the viewpoint of the energy density and the cycle characteristics, an excellent positive electrode can be obtained.

The average particle diameter of the positive electrode active material is preferably 0.1 to 50 $\mu$m, more preferably 1 to 30 $\mu$m, and still more preferably 2 to 25 $\mu$m. Here, the average particle diameter means a particle diameter (median diameter: $D_{50}$) at a cumulative value of 50% in a particle size distribution (in terms of volume) by a laser diffraction scattering method. When the specific surface area of the positive electrode active material is in the above range and the average particle diameter is in the above range, from the viewpoint of the energy density and the cycle characteristics, an excellent positive electrode can be obtained.

The conductive auxiliary agent preferably comprises a conductive auxiliary agent constituted of spherical amorphous carbon particles, that is, preferably comprises an aggregate (secondary particle = primary aggregate) of the spherical amorphous carbon particles (primary particles). Such a conductive auxiliary agent is preferably carbon black such as acetylene black. The conductive auxiliary agent preferably comprises 80% by mass or more of the conductive auxiliary agent constituted of spherical amorphous carbon particles, and preferably comprises 90% by mass or more thereof, and the whole may be the conductive auxiliary agent constituted of spherical amorphous carbon particles.

The average particle diameter of the conductive auxiliary agent is, from the viewpoint of providing a positive electrode suppressed in the contact resistance and the charge transfer resistance while having a sufficient electrode density, in terms of average particle diameter of secondary particle (primary aggregate), preferably 3.5 $\mu$m or smaller, and more preferably 3 $\mu$m or smaller, and may be set at 2 $\mu$m or smaller; and preferably 50 nm or larger, and more preferably 100 nm or larger. The average particle diameter of the primary particles is preferably in the range of 5 to 500 nm, and more preferably in the range of 10 to 300 nm; and the primary particles, for example, in the range of 50 to 250 nm can be used. Here, the average particle diameter means a particle diameter (median diameter: $D_{50}$) at a cumulative value of 50% in a particle size distribution (in terms of volume) by a laser diffraction scattering method. When the average particle diameter of the conductive auxiliary agent is in the above range, since contact points of the conductive auxiliary agent with the active material can be formed sufficiently, and the conductive auxiliary agent can conform to expansion and contraction of the active material during cycles and then conductive paths can be secured, rises in the contact resistance and the charge transfer resistance can be suppressed, resultantly enabling providing favorable cycle characteristics.

The content of the conductive auxiliary agent in the positive electrode active material layer is, with respect to the positive electrode active material, preferably 1.8% by mass or higher, and more preferably 2% by mass or higher; and preferably 6% by mass or lower, more preferably 5% by mass or lower, and still more preferably 4.5% by mass or lower. When the content of the conductive auxiliary agent is high, the contact resistance and the charge transfer resistance are likely to decrease; but in the case where the electrode density is high (the porosity is low), when the content of the conductive auxiliary agent is high, the charge transfer resistance is conversely likely to become high. On the other hand, when the content of the conductive auxiliary agent is low, the contact resistance is likely to become high. When the content of the conductive auxiliary agent is in the above range, even if the porosity of the positive electrode active material layer is as low a value as described later (that is, even if the electrode density is high), an electrode low in the contact resistance and suppressed in an increase in the charge transfer resistance can be obtained.

The positive electrode active material layer can be formed as follows. The positive electrode active material layer can be formed by first preparing a slurry containing the positive electrode active material, a conductive auxiliary agent, a binder and a solvent, applying and drying the slurry on the positive electrode current collector, and pressing the dried slurry. As the slurry solvent to be used in the positive electrode fabrication, N-methyl-2-pyrrolidone (NMP) can be used.

As the binder, binders usually used as binders for positive electrodes, such as polytetrafluoroethylene (PTFE) and polyvinylidene fluoride (PVDF) can be used.

The content of the binder in the positive electrode active material layer is, from the viewpoint of the binding power and the energy density, which are in a tradeoff relation, preferably 1 to 15% by mass, and more preferably 1 to 10% by mass.

Although a higher proportion of the positive electrode active material in the positive electrode active material layer is better because the capacity per mass becomes larger, addition of a conductive auxiliary agent is preferable from the point of reduction of the electrode resistance of the electrode; and addition of a binder is preferable from the point of the electrode strength. A too low proportion of the conductive auxiliary agent makes it difficult for a sufficient conductivity to be kept, and becomes liable to lead to an increase in the electrode resistance. A too low proportion of the binder makes it difficult for the adhesive power with the current collector, the active material and the conductive auxiliary agent to be kept, and causes electrode exfoliation in some cases.

Further the porosity of the positive electrode active material layer (not including a current collector) constituting the positive electrode is 19% or lower, preferably 18.3% or lower. When the porosity is high (that is, the electrode density is low), since the contact resistance and the charge transfer resistance are likely to become high, it is preferable that the porosity be made thus low, resultantly enabling raising the electrode density. On the other hand, when the porosity is too low (electrode density is too high), since although the contact resistance becomes low, depending on the amount of the conductive auxiliary agent, the charge transfer resistance becomes high and the rate characteristics decrease, it is desirable that a porosity in some degree be secured. From this viewpoint, the porosity is set at 16% or higher.

By setting the porosity of the positive electrode active material layer in the above range and setting the content of the conductive auxiliary agent in the above range, a positive electrode low in the contact resistance and suppressed in an increase in the charge transfer resistance can be obtained, and the cycle characteristics (particularly cycle characteristics nearly at 25°C) of the secondary battery can be improved.

The porosity means a proportion occupied by a remainder volume obtained by subtracting a volume occupied by the particles of the active material, the conductive auxiliary agent and the like from an apparent volume of the whole active material layer (see the following expression). Therefore, the porosity can be determined by a calculation from the thickness and the mass per unit area of the active material layer, and the true density of the particles of the active material, the conductive auxiliary agent and the like.

$$\text{Porosity} = \text{(an apparent volume of the active material layer} - \text{a volume of the particles)/(the apparent volume of the active material layer)}$$

Here, the "volume of the particles" (a volume occupied by the particles contained in the active material layer) in the above expression can be calculated from the following expression.

$$\text{Volume of the particles} = \text{(a weight per unit area of the active material layer} \times \text{an area of the active material layer} \times \text{a content of the particles)/(a true density of the particles)}$$

Here, the "area of the active material layer" refers to an area of a plane thereof on the opposite side (separator side) to the current collector side.

The thickness of the positive electrode active material layer is not especially limited, and can suitably be set according to desired characteristics. For example, from the viewpoint of the energy density, the thickness can be set large; and from the viewpoint of the output characteristics, the thickness can suitably be set small. The thickness of the positive electrode active material layer can suitably be set, for example, in the range of 10 to 250 $\mu$m, and is preferably 20 to 200 $\mu$m, and more preferably 40 to 180 $\mu$m.

As the current collector for the positive electrode, aluminum, stainless steels, nickel, titanium and alloys thereof can be used. The shape thereof includes foils, flat plates and mesh forms. Particularly aluminum foils can suitably be used.

The lithium ion secondary battery according to the exemplary embodiment comprises the above positive electrode, a negative electrode, and a nonaqueous electrolyte solution. Further a separator can be provided between the positive electrode and the negative electrode. A plurality of pairs of the positive electrode and the negative electrode can be provided.

As a negative electrode active material, materials capable of occluding and releasing lithium ions, such as lithium metal, carbonaceous materials and Si-based materials can be used. The carbonaceous materials include graphite, amorphous carbon, diamond-like carbon, fullerene, carbon nanotubes and carbon nanohorns. As the Si-based materials, Si, $SiO_2$, $SiO_x$ ($0 < x \leq 2$) and Si-containing composite materials can be used, or composite materials containing two or more thereof may be used.

In the case of using lithium metal as the negative electrode active material, a negative electrode can be formed by a system such as a melt cooling, liquid quenching, atomizing, vacuum deposition, sputtering, plasma CVD, optical CVD, thermal CVD and sol-gel systems.

In the case of using a carbonaceous material or a Si-based material as the negative electrode active material, a negative electrode can be obtained by mixing the carbonaceous material (or the Si-based material) and a binder such as a polyvinylidene fluoride (PVDF), dispersing and kneading the mixture in a solvent such as NMP to thereby obtain a slurry, applying and drying the slurry on a negative electrode current collector, and as required pressing the dried slurry. Alternatively, a negative electrode can be obtained by previously forming a negative electrode active material layer, and thereafter forming a thin film to become a current collector by a method such as a vapor deposition method, a CVD method or a sputtering method. The negative electrode thus fabricated has the current collector for the negative electrode, and the negative electrode active material layer formed on the current collector.

The average particle diameter of the negative electrode active material is, from the point of suppressing side-reactions during the charge and discharge time and thereby suppressing a decrease in the charge and discharge efficiency, preferably 1 $\mu$m or larger, more preferably 2 $\mu$m or larger, and further preferably 5 $\mu$m or larger, and from the viewpoint of the input and output characteristics and the viewpoint of the electrode fabrication (smoothness of the electrode surface, and the like), preferably 80 $\mu$m or smaller, and more preferably 40 $\mu$m or smaller. Here, the average particle diameter means a particle diameter (median diameter: $D_{50}$) at a cumulative value of 50% in a particle size distribution (in terms of volume) by a laser diffraction scattering method.

The negative electrode active material layer may contain a conductive auxiliary agent as required. As the conductive auxiliary agent, conductive materials generally used as conductive auxiliary agents for negative electrodes, such as carbonaceous materials such as carbon black, Ketjen black and acetylene black can be used.

The binder for the negative electrode is not especially limited, but includes polyvinylidene fluoride (PVdF), vinylidene fluoride-hexafluoropropylene copolymers, vinylidene fluoride-tetrafluoroethylene copolymers, styrene-butadiene copolymer rubber, polytetrafluoroethylene, polypropylene, polyethylene, polyimide, polyamideimide, methyl (meth)acrylate, ethyl (meth)acrylate, butyl (meth)acrylate, (meth)acrylonitrile, isoprene rubber, butadiene rubber and fluororubber. As the slurry solvent, N-methyl-2-pyrrolidone (NMP) and water can be used. In the case of using water as the solvent, carboxymethyl cellulose, methyl cellulose, hydroxymethyl cellulose, ethyl cellulose and polyvinyl alcohol can further be used as a thickener.

The content of the binder for the negative electrode is, from the viewpoint of the binding power and the energy density, which are in a tradeoff relation, in terms of content to negative electrode active material, preferably in the range of 0.5 to 30% by mass, more preferably in the range of 0.5 to 25% by mass, and still more preferably in the range of 1 to 20% by mass.

As a negative electrode current collector, copper, stainless steel, nickel, titanium and alloys thereof can be used.

As the electrolyte, a nonaqueous electrolyte solution in which a lithium salt is dissolved in one or two or more nonaqueous solvents can be used.

The nonaqueous solvent includes cyclic carbonates such as ethylene carbonate, propylene carbonate, vinylene carbonate and butylene carbonate; chain carbonates such as ethyl methyl carbonate (EMC), diethyl carbonate (DEC), dimethyl carbonate (DMC) and dipropyl carbonate (DPC); aliphatic carbonate esters such as methyl formate, methyl acetate and ethyl propionate; $\gamma$-lactones such as $\gamma$-butyrolactone; chain ethers such as 1,2-ethoxyethane (DEE) and ethoxymethoxyethane (EME); and cyclic ethers such as tetrahydrofuran and 2-methyltetrahydrofuran. These nonaqueous solvents can be used singly or as a mixture of two or more.

The lithium salt to be dissolved in the nonaqueous solvent is not especially limited, but examples thereof include $LiPF_6$, $LiAsF_6$, $LiAlCl_4$, $LiClO_4$, $LiBF_4$, $LiSbF_6$, $LiCF_3SO_3$, $LiCF_3CO_2$, $Li(CF_3SCO_2)_2$, $LiN(CF_3SO_2)_2$, and lithium bisoxalatoborate. These lithium salts can be used singly or as a combination of two or more. Further as a nonaqueous electrolyte, a polymer component may be contained. The concentration of the lithium salt can be established in the range of 0.8 to 1.2 mol/L, and 0.9 to 1.1 mol/L is preferable.

As the separator, there can be used resin-made porous membranes, woven fabrics, nonwoven fabrics and the like. Examples of the resin constituting the porous membrane include polyolefin resins such as polypropylene and polyethylene, polyester resins, acryl resins, styrene resins and nylon resins. Particularly polyolefin microporous membranes are preferable because being excellent in the ion permeability, and the capability of physically separating a positive electrode and a negative electrode. Further as required, a layer containing inorganic particles may be formed on the separator, and the inorganic particles include those of insulative oxides, nitrides, sulfides, carbide and the like. Among these, it is preferable that $TiO_2$ or $Al_2O_3$ be contained.

As an outer packaging container, there can be used cases composed of flexible films, can cases and the like, and from the viewpoint of the weight reduction of batteries, flexible films are preferably used.

As the flexible film, a film having resin layers provided on front and back surfaces of a metal layer as a base material can be used. As the metal layer, there can be selected one having a barrier property including prevention of leakage of the electrolyte solution and infiltration of moisture from the outside, and aluminum, stainless steel or the like can be used. At least on one surface of the metal layer, a heat-fusible resin layer of a modified polyolefin or the like is provided. An outer packaging container is formed by making the heat-fusible resin layers of the flexible films to face each other and heat-fusing the circumference of a portion accommodating an electrode laminated body. On the surface of the outer package on the opposite side to a surface thereof on which the heat-fusible resin layer is formed, a resin layer of a nylon film, a polyester resin film or the like can be provided.

In fabrication of the electrodes, as apparatuses to form the active material layers on the current collectors, apparatuses to carry out various application methods such as a doctor blade method, a die coater method, a gravure coater method, a transfer system and a vapor deposition system, and combinations of these application apparatuses can be used. In order to precisely form application edge portions of the active materials, a die coater is especially preferably used. The application systems of the active materials by a die coater are roughly classified into two kinds of continuous application systems in which an active material is continuously formed on a long current collector along the longitudinal direction thereof, and intermittent application systems in which applied and unapplied portions of an active material are alternately repeatedly formed along the longitudinal direction of a current collector, and one of these systems can suitably be selected.

A cross-sectional view of one example (laminate-type) of the lithium ion secondary battery according to the exemplary embodiment is shown in Figure 1. As shown in Figure 1, the lithium ion secondary battery of the present example has a positive electrode comprising a positive electrode current collector 3 composed of a metal such as an aluminum foil and a positive electrode active material layer 1 containing a positive electrode active material provided thereon, and a negative electrode comprising a negative electrode current collector 4 composed of a metal such as a copper foil and a negative electrode active material layer 2 containing a negative electrode active material provided thereon. The positive electrode and the negative electrode are laminated through a separator 5 composed of a nonwoven fabric, a polypropylene microporous membrane or the like so that the positive electrode active material layer 1 and the negative electrode active material layer 2 face each other. The pair of electrodes is accommodated in a container formed of outer packages 6, 7 composed of an aluminum laminate film. A positive electrode tab 9 is connected to the positive electrode current collector 3, and a negative electrode tab 8 is connected to the negative electrode current collector 4. These tabs are led outside the container. The electrolyte solution is injected in the container, which is then sealed. There may be made a structure in which an electrode group in which a plurality of electrode pairs are laminated is accommodated in the container.

Examples

(Example 1)

A lithium nickel composite oxide ($Li_aNi_{1-x}M_xO_2$, wherein M is Co and Mn)(BET specific surface area: 0.4 $m^2$/g) having a layered crystal structure as a positive electrode active material, a carbon black (an acetylene black, secondary particle diameter $D_{50}$: 2.5 $\mu$m, primary particle diameter: 150 nm) as a conductive auxiliary agent, and a polyvinylidene fluoride (PVDF) as a binder were used and mixed so that their mass ratio satisfies the positive electrode active material: the conductive auxiliary agent: the binder = 95:2:3, and dispersed in an organic solvent to thereby prepare a slurry (the content to the whole positive electrode active material layer of the conductive auxiliary agent was 2% by mass, and the content to the positive electrode active material of the conductive auxiliary agent was 2.1% by mass). The slurry was applied on positive electrode current collectors (aluminum foils) and dried to thereby form positive electrode active material layers of 70 $\mu$m in thickness on both surfaces of the positive electrode current collectors. The resultants were rolled by a roller press machine, and processed into a predetermined size to thereby obtain positive electrode sheets having a porosity of 18%.

A graphite coated with an amorphous carbon on its surface was used as a negative electrode active material; PVDF was used as a binder; and these were mixed and dispersed in an organic solvent to thereby prepare a slurry. The slurry was applied on negative electrode current collectors (copper foils), and dried to thereby form negative electrode active material layers on both surfaces of the negative electrode current collectors, and processed into a predetermined size to thereby obtain negative electrode sheets.

Five sheets of the fabricated positive electrode sheets and six sheets of the fabricated negative electrode sheets were alternately laminated through a separator composed of a polypropylene of 25 $\mu$m in thickness. A negative electrode terminal and a positive electrode terminal were attached thereto; the resultant was accommodated in outer packaging containers composed of an aluminum laminate film; an electrolyte solution in which a lithium salt was dissolved was added thereto; and the containers were sealed to thereby obtain a laminate-type secondary battery. For the obtained secondary battery, measurements (evaluation of the positive electrode) of the contact resistance and the charge transfer resistance, and a measurement (evaluation of the cycle characteristics) of the capacity retention rate were carried out.

Here, as the solvent of the electrolyte solution, a mixed solution of EC and DEC (EC/DEC=3/7 (in volume ratio)) was used and 1mol/L of $LiPF_6$ as the lithium salt was dissolved in the mixed solvent.

(Example 2)

A positive electrode sheet was fabricated as in Example 1, except for altering the content to the whole positive electrode active material layer of the conductive auxiliary agent to 3% by mass (the content to the positive electrode active material of the conductive auxiliary agent was 3.1% by mass, and the content in the positive electrode active material layer of the positive electrode active material was 94% by mass); and by using the positive electrode sheet, a secondary battery was fabricated as in Example 1. For the obtained secondary battery, measurements (evaluation of the positive electrode) of the contact resistance and the charge transfer resistance, and a measurement (evaluation of the cycle characteristics) of the capacity retention rate were carried out.

(Example 3)

A positive electrode sheet was fabricated as in Example 1, except for altering the content to the whole positive electrode active material layer of the conductive auxiliary agent to 4% by mass (the content to the positive electrode active material of the conductive auxiliary agent was 4.3% by mass, and the content in the positive electrode active material layer of the positive electrode active material was 93% by mass); and by using the positive electrode sheet, a secondary battery was fabricated as in Example 1. For the obtained secondary battery, measurements (evaluation of the positive electrode) of the contact resistance and the charge transfer resistance, and a measurement (evaluation of the cycle characteristics) of the capacity retention rate were carried out.

(Comparative Example 1)

A positive electrode sheet was fabricated as in Example 1, except for carrying out the rolling so that the porosity became 33%; and by using the positive electrode sheet, a secondary battery was fabricated as in Example 1. For the obtained secondary battery, measurements (evaluation of the positive electrode) of the contact resistance and the charge transfer resistance, and a measurement (evaluation of the cycle characteristics) of the capacity retention rate were carried out.

(Comparative Example 2)

A positive electrode sheet was fabricated as in Comparative Example 1, except for altering the content to the whole positive electrode active material layer of the conductive auxiliary agent to 3% by mass (the content to the positive electrode active material of the conductive auxiliary agent was 3.1% by mass); and by using the positive electrode sheet, a secondary battery was fabricated as in Comparative Example 1. For the obtained secondary battery, measurements (evaluation of the positive electrode) of the contact resistance and the charge transfer resistance, and a measurement (evaluation of the cycle characteristics) of the capacity retention rate were carried out.

(Comparative Example 3)

A positive electrode sheet was fabricated as in Comparative Example 1, except for altering the content to the whole positive electrode active material layer of the conductive auxiliary agent to 4% by mass (the content to the positive electrode active material of the conductive auxiliary agent was 4.3% by mass); and by using the positive electrode sheet, a secondary battery was fabricated as in Comparative Example 1. For the obtained secondary battery, measurements (evaluation of the positive electrode) of the contact resistance and the charge transfer resistance, and a measurement (evaluation of the cycle characteristics) of the capacity retention rate were carried out.

(Determination of the porosity)

The porosity means a proportion occupied by a remainder volume obtained by subtracting a volume occupied by the particles of the active material, the conductive auxiliary agent and the like from an apparent volume of the whole active material layer as described above. Therefore, the porosity was determined by the following expression from the thickness and the mass per unit area of the active material layer, and the true densities of the active material and the conductive auxiliary agent.

$$\text{Porosity (\%)} = 100 \times \text{(an apparent volume of the active material layer} - \text{a volume of the particles)/(the apparent volume of the active material layer)}$$

(Measurements of the contact resistance and the charge transfer resistance)

The obtained secondary batteries were charged to 4.15 V, and subjected to an impedance measurement using a frequency response analyzer and a potentio/galvanostat, and the contact resistances and the charge transfer resistances were calculated.

(Measurement of the capacity retention rate)

The obtained secondary batteries were subjected to a cycle test under the following condition.
CC-CV charge (upper limit voltage: 4.15 V, current: 1C, CV time: 1.5 hours), CC discharge (lower limit voltage: 2.5 V, current 1C), the environmental temperature during the charge and discharge: 25°C
A proportion of a discharge capacity at the 200th cycle to a discharge capacity at the first cycle was defined as a capacity retention rate.

[Table 1]

[Table 1]

| | Porosity (%) | Content of Conductive Auxiliary Agent (% by mass) | Contact Resistance (mΩ) | Charge Transfer Resistance (mΩ) | Capacity Retention Rate (%) |
|---|---|---|---|---|---|
| Example 1 | 18 | 2 | 110 | 332 | 92 |
| Example 2 | 18 | 3 | 110 | 325 | 92 |
| Example 3 | 18 | 4 | 90 | 310 | 92 |
| Comparative Example 1 | 33 | 2 | 177 | 595 | 88 |
| Comparative Example 2 | 33 | 3 | 187 | 345 | 88 |
| Comparative Example 3 | 33 | 4 | 150 | 285 | 90 |

As indicated by the above evaluation results of Examples 1 to 3, it is clear that the secondary batteries including the positive electrode active material layer in which a content of the conductive auxiliary agent is in the range of 1.8 to 6% by mass with respect to the positive electrode active material, and a porosity of the positive electrode active material layer is 20% or lower were lower in the contact resistance, more suppressed in the increase in the charge transfer resistance, and higher in the capacity retention rate than the secondary batteries (Comparative Examples 1 to 3) including the active material layer having a porosity of higher than 20%.

The positive electrode active material layer formed by using the positive electrode active material having a specific BET specific surface area (0.1 to 1 $m^2/g$) and the conductive auxiliary agent constituted of spherical amorphous carbon particles, and containing a specific amount (1.8 to 6% by mass) of the conductive auxiliary agent, in the state of being at a high density of a porosity of 20% or lower, enables the conductive auxiliary agent to be present in a suitable volume ratio to the active material particles and enables the conductive auxiliary agent to be dispersed well between the active material particles. Hence, a positive electrode low in the contact resistance and suppressed in the increase in the charge transfer resistance can be obtained. By using such a positive electrode, a battery high in the energy density and having favorable cycle characteristics can be provided.

In the foregoing, the present invention has been described with reference to the exemplary embodiments and the Examples; however, the present invention is not limited to the exemplary embodiments and the Examples. Various modifications understandable to those skilled in the art may be made to the constitution and details of the present invention within the scope thereof.

Reference Signs List

1    POSITIVE ELECTRODE ACTIVE MATERIAL LAYER
2    NEGATIVE ELECTRODE ACTIVE MATERIAL LAYER
3    POSITIVE ELECTRODE CURRENT COLLECTOR
4    NEGATIVE ELECTRODE CURRENT COLLECTOR
5    SEPARATOR
6    LAMINATE OUTER PACKAGE
7    LAMINATE OUTER PACKAGE
8    NEGATIVE ELECTRODE TAB
9    POSITIVE ELECTRODE TAB

**Claims**

1.  A positive electrode for a lithium ion secondary battery, comprising a current collector (3) and a positive electrode active material layer (1) on the current collector (3),
    wherein the positive electrode active material layer (1) comprises a positive electrode active material, a conductive auxiliary agent and a binder;

the positive electrode active material comprises a lithium composite oxide, and a BET specific surface area of the positive electrode active material is 0.1 to 1 $m^2/g$; (based on the measurement at 77K by the nitrogen adsorption method),

at least a part of the conductive auxiliary agent comprises a spherical amorphous carbon particle; and

a content of the conductive auxiliary agent is 1.8 to 6% by mass with respect to the positive electrode active material; **characterized in that** a porosity of the positive electrode active material layer (1) is 16% or higher and 19% or lower [porosity = (apparent volume of the active material layer - a volume of the particles)/(apparent volume of the active material layer)].

2. The positive electrode according to claim 1, wherein the BET specific surface area of the positive electrode active material is 0.3 to 0.5 $m^2/g$.

3. The positive electrode according to claim 1 or 2, wherein the lithium composite oxide is a nickel-containing lithium composite oxide having a layered crystal structure.

4. The positive electrode according to claim 3, wherein the lithium composite oxide is a compound represented by the following formula (1):

$$Li_aNi_{1-x}M_xO_2 \qquad (1)$$

wherein M is at least one selected from Li, Co, Mn, Mg and Al; and $0 < a \leq 1$ and $0 < x < 0.7$.

5. The positive electrode according to any one of claims 1 to 4, wherein the content of the conductive auxiliary agent is 2 to 5% by mass with respect to the positive electrode active material.

6. The positive electrode according to any one of claims 1 to 5, wherein an average particle diameter ($D_{50}$) of the conductive auxiliary agent is 3.5 $\mu$m or smaller, the average particle diameter meaning a particle diameter at a cumulative value of 50% in a particle size distribution, in terms of volume, by a laser diffraction scattering method.

7. The positive electrode according to any one of claims 1 to 6, wherein the conductive auxiliary agent is a carbon black.

8. A lithium ion secondary battery, comprising a positive electrode according to any one of claims 1 to 7, a negative electrode, and a nonaqueous electrolyte solution.

**Patentansprüche**

1. Positive Elektrode für eine Lithiumionen-Sekundärbatterie mit einem Stromkollektor (3) und einer aktiven Positivelektroden-Materialschicht (1) auf dem Stromkollektor (3),

wobei die aktive Positivelektroden-Materialschicht (1) ein aktives Positivelektroden-Material, einen leitfähigen Zusatzstoff und einen Binder aufweist,

wobei das aktive Positivelektroden-Material ein Lithium-Verbindungsoxid aufweist und ein spezifischer BET-Flächenbereich des aktiven Positivelektroden-Materials 0,1 bis 1 $m^2/g$ (basierend auf einer Messung bei 77 K durch das Stickstoff-Adsorptionsverfahren) beträgt,

wobei zumindest ein Teil des leitfähigen Zusatzstoffs ein sphärisches amorphes Kohlenstoffpartikel aufweist und der Anteil des leitfähigen Zusatzstoffs 1,8 bis 6 Massen-% mit Bezug auf das aktive Positivelektroden-Material beträgt, **dadurch gekennzeichnet, dass** die Porosität der aktiven Positivelektroden-Materialschicht (1) 16 % oder mehr und 19 % oder weniger beträgt [Porosität = (erkennbares Volumen der aktiven Materialschicht - Volumen der Partikel)/(erkennbares Volumen der aktiven Materialschicht)].

2. Positive Elektrode nach Anspruch 1, wobei der spezifische BET-Flächenbereich des aktiven Positivelektroden-Materials 0,3 bis 0,5 $m^2/g$ beträgt.

3. Positive Elektrode nach Anspruch 1 oder 2, wobei das Lithium-Verbindungsoxid ein Nickel enthaltendes Lithium-Verbindungsoxid mit einer geschichteten Kristallstruktur ist.

4. Positive Elektrode nach Anspruch 3, wobei das Lithium-Verbindungsoxid eine Verbindung ist, die durch die folgende Formel (1) repräsentiert ist:

$$Li_aNi_{1-x}M_xO_2 \qquad (1),$$

wobei M zumindest eines ist, das ausgewählt ist aus Li, Co, Mn, Mg und Al und wobei $0 < a \leq 1$ und $0 < x < 0,7$.

5. Positive Elektrode nach einem der Ansprüche 1 bis 4, wobei der Anteil des leitfähigen Zusatzstoffs 2 bis 5 Massen-% mit Bezug auf das aktive Positivelektroden-Material beträgt.

6. Positive Elektrode nach einem der Ansprüche 1 bis 5, wobei ein mittlerer Partikeldurchmesser ($D_{50}$) des leitfähigen Zusatzstoffs 3,5 $\mu$m oder weniger beträgt wobei der mittlere Partikeldurchmesser einen Partikeldurchmesser bei einem kumulativen Wert von 50 % in einer Partikelgrößen-Verteilung hinsichtlich des Volumens durch einen Laserbeugungs-Streuverfahren bedeutet.

7. Positive Elektrode nach einem der Ansprüche 1 bis 6, wobei der leitfähige Zusatzstoff Ruß ist.

8. Lithiumionen-Sekundärbatterie mit einer positiven Elektrode nach einem der Ansprüche 1 bis 7, einer negativen Elektrode und einer nichtwässrigen Elektrolytlösung.

**Revendications**

1. Electrode positive pour une batterie secondaire lithium-ion, comprenant un collecteur de courant (3) et une couche de matériau actif d'électrode positive (1) sur le collecteur de courant (3),
dans laquelle la couche de matériau actif d'électrode positive (1) comprend un matériau actif d'électrode positive, un agent auxiliaire conducteur et un liant;
le matériau actif d'électrode positive comprend un oxyde composite de lithium, et une surface spécifique BET du matériau actif d'électrode positive est 0,1 à 1 m$^2$/g; (basé sur la mesure à 77K par le procédé d'adsorption d'azote), au moins une partie de l'agent auxiliaire conducteur comprend une particule de carbone amorphe sphérique; et une teneur de l'agent auxiliaire conducteur est 1,8 à 6% en masse par rapport au matériau actif d'électrode positive; **caractérisée en ce qu'**une porosité de la couche de matériau actif d'électrode positive (1) est 16% ou supérieure et 19% ou inférieure [porosité = (volume apparent de la couche de matériau actif - un volume des particules)/(volume apparent de la couche de matériau actif)].

2. Electrode positive selon la revendication 1, dans laquelle la surface spécifique BET du matériau actif d'électrode positive est 0,3 à 0,5 m$^2$/g.

3. Electrode positive selon la revendication 1 ou 2, dans laquelle l'oxyde composite de lithium est un oxyde composite de lithium contenant du nickel ayant une structure cristalline en couches.

4. Electrode positive selon la revendication 3, dans laquelle l'oxyde composite de lithium est un composé représenté par la formule (1) suivante:

$$Li_aNi_{1-x}M_xO_2 \qquad (1)$$

dans laquelle M est au moins un choisi parmi Li, Co, Mn, Mg et Al; et $0 < a \leq 1$ et $0 < x < 0,7$.

5. Electrode positive selon l'une quelconque des revendications 1 à 4, dans laquelle la teneur de agent auxiliaire conducteur est 2 à 5% en masse par rapport au matériau actif d'électrode positive.

6. Electrode positive selon l'une quelconque des revendications 1 à 5, dans laquelle un diamètre de particule moyen ($D_{50}$) de l'agent auxiliaire conducteur est 3,5 mm ou plus petit, le diamètre de particule moyen signifiant un diamètre de particule à une valeur cumulée de 50% dans une distribution granulométrique, en termes de volume, par un procédé de diffusion par diffraction laser.

7. Electrode positive selon l'une quelconque des revendications 1 à 6, dans laquelle l'agent auxiliaire conducteur est un noir de carbone.

8. Batterie secondaire lithium-ion, comprenant une électrode positive selon l'une quelconque des revendications 1 à 7, une électrode négative et une solution d'électrolyte non aqueuse.

Fig. 1

**EP 3 358 652 B1**

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2014017583 A